Europäisches Patentamt

European Patent Office

Office européen des brevets

(19)

(11) **EP 0 883 109 A2**

(12) **EUROPEAN PATENT APPLICATION**

(43) Date of publication:
**09.12.1998 Bulletin 1998/50**

(51) Int. Cl.$^6$: **G11B 5/29**, G11B 5/31,
G11B 5/53

(21) Application number: **98109328.9**

(22) Date of filing: **22.05.1998**

(84) Designated Contracting States:
**AT BE CH CY DE DK ES FI FR GB GR IE IT LI LU
MC NL PT SE**
Designated Extension States:
**AL LT LV MK RO SI**

(30) Priority: **02.06.1997 DE 19723004
28.10.1997 DE 19747430**

(71) Applicant:
**DEUTSCHE THOMSON-BRANDT GMBH
78048 Villingen-Schwenningen (DE)**

(72) Inventors:
• **Kaaden, Jürgen
78052 Villingen-Schwenningen (DE)**
• **Wursthorn, Edgar
78073 Bad Dürrheim (DE)**

(74) Representative:
**Rossmanith, Manfred et al
Deutsche Thomson-Brandt GmbH,
Licensing & Intellectual Property,
Göttinger Chaussee 76
30453 Hannover (DE)**

(54) **Head drum with thin film heads**

(57) To increase the writing density of digital recording systems on magnetic tapes, increasingly smaller track widths are chosen. First head arrangements, which are produced by thin-film technology, are already known.

In order to provide a head drum with a head arrangement based on the thin-film technique for magnetic tape apparatuses recording on slanting tracks which can be produced at low cost and with high reliability, according to the invention two heads (1, 2) are arranged with a defined height on a substrate (3) for writing and/or reading parallel tracks. By prescribing the azimuth angle and the height between the heads, applications for simultaneous writing or simultaneous reading or for simultaneous writing and reading are possible.

Fig.2

## Description

The invention relates to a head drum with a head arrangement based on the thin-film technique for magnetic tape apparatuses which record on slanting tracks and/or read from slanting tracks, and to applications for the head drum in magnetic tape apparatuses, in particular digital data recording systems, such as for example video recorders, camcorders and data streamers.

Digital data storage systems for magnetic tapes use, inter alia, rotating head drums for the data recording, since these permit very effective utilization of the magnetic tape with a high data density. For example, digital video recordings on compact cassettes for the consumer market and for professional systems, as well as data backup systems for computers and PCs, are known. To increase the data density, the head arrangements of these systems are becoming smaller and smaller in their dimensions, as a result of which, however, their mechanical arrangement and alignment is becoming more and more complex.

To increase the writing density, in the meantime magnetic heads based on thin-film technology, which are suitable for reduced track widths, are also known. For instance, production processes by which magnetic heads can be produced on a substrate by vapour deposition of various layers and by etching methods are specified in the patent specifications US 5,279,026, US 5,604,973, US 5,113,575 and US 5,566,442.

EP 0 519 182 B1 discloses head arrangements for a DCC (Digital Compact Cassette) system which uses three different magnetic heads. Here, one head for recording and one head for reproducing digital signals and one head for analogue signals are arranged on the same substrate, all three heads respectively having a plurality of channels for recording and reproducing by the longitudinal track method.

The object of the present invention is to provide a head drum with a head arrangement based on the thin-film technique for magnetic tape apparatuses recording on slanting tracks which can be produced at low cost and with high productivity.

This object is achieved by the features of Claim 1 with respect to a head drum and by the features of Claims 16 - 20 with respect to a magnetic tape apparatus. Advantageous developments and applications are specified in the subclaims.

The head drum of the present invention uses a head arrangement with two heads, which are arranged with a defined height on a substrate by means of the thin-film technique. By the thin-film technique, this height, like the spacing between the heads, can be produced with very high precision. As a result, slanting tracks can be recorded on a magnetic tape with a very small track width, the two heads being able to write or read two tracks simultaneously, or write one track and read one track simultaneously.

The track height between the two heads is chosen such that the tracks are written without any guard band, that is to say closely together without gaps, for 100% tape utilization. Neighbouring tracks are in this case written on with different azimuth angles. The heads include a yoke made of a magnetic material, which is shaped to form a head gap on the side facing the magnetic tape. It is surrounded by coil-like, axial windings or spiral-like windings, by which the electrical information can be written or read. By this compact arrangement, the two heads can be placed very closely next to each other on a substrate and allow head spacings which may be one half or one third of conventional heads, separately arranged mechanically.

The closely neighbouring heads of this head arrangement permit very high flexibility of the associated data storage system. For example, data can be written even at half or one third of the normal tape speed. Alternatively, with simultaneous writing by means of two opposite pairs of magnetic heads, the data rate is increased.

Writing and reading heads which simultaneously read and write and nevertheless have very good crosstalk attenuation can also be advantageously arranged closely next to one other. A thin magnetic barrier, which is applied on the substrate between the two heads, and thin-film transformers, as an alternative to a ferrite transformer, which may additionally also include short-circuit windings respectively between the thin-film transformers, can be additionally used for this purpose. In this way, crosstalk attenuations of up to 90 dB can be achieved.

Head arrangements which are arranged 180° from one another on the head drum can be arranged together with the associated thin-film transformers on a silicon substrate. In addition, electronic components, such as amplifier electronics, can also be integrated on the substrate. It is therefore possible to manufacture in series production very low-cost head drums, which at the same time have very high precision since the head arrangements are arranged on only one substrate and therefore complicated adjustments are not needed.

Applications for these head drums arise, in particular, in the consumer sector for digital video and camcorders, for example DV or DVC (Digital Video Cassette), for computer digital data storage systems, and in the professional sector for DV-CAM and DVC-PRO.

The invention and applications are explained by way of example below with reference to diagrammatic drawings, in which:

Figure 1a shows a head arrangement with two heads on a substrate,
Figure 1b shows a single head with spiral-like windings in plan view and in a side view,
Figure 2 shows the head arrangement of Figure 1 with the side directed towards the magnetic tape,
Figure 3 shows two magnetic tracks written by this head arrangement on a magnetic tape,

Figure 4a shows a head drum with a pair-of-heads arrangement, the heads of which have different azimuth angles,

Figure 4b shows a block diagram for the signal path during reading and writing,

Figure 5 shows a head drum with two pair-of-heads arrangements, the heads of which respectively have different azimuth angles, both head arrangements alternatively writing or reading,

Figure 6 shows a head drum with two pair-of-heads arrangements, the heads of which respectively have different azimuth angles, the one head arrangement writing and the other subsequently reading,

Figure 7 shows a head drum with two pair-of-heads arrangements, the neighbouring heads of which respectively have the same azimuth angle,

Figure 8 shows a head drum with four heads lying closely next to one other, with alternating azimuth angles,

Figure 9 shows a head drum with a pair of heads and a single head at an approximately 180° interval,

Figures 10, 11, 12 respectively show a diagram for illustrating the function of the head drum of Figure 9 for writing or reading a magnetic tape at normal, half and 1/4 the data rate, and

Figure 13 shows a head drum with reduced diameter and wrapping around the head of about 270°.

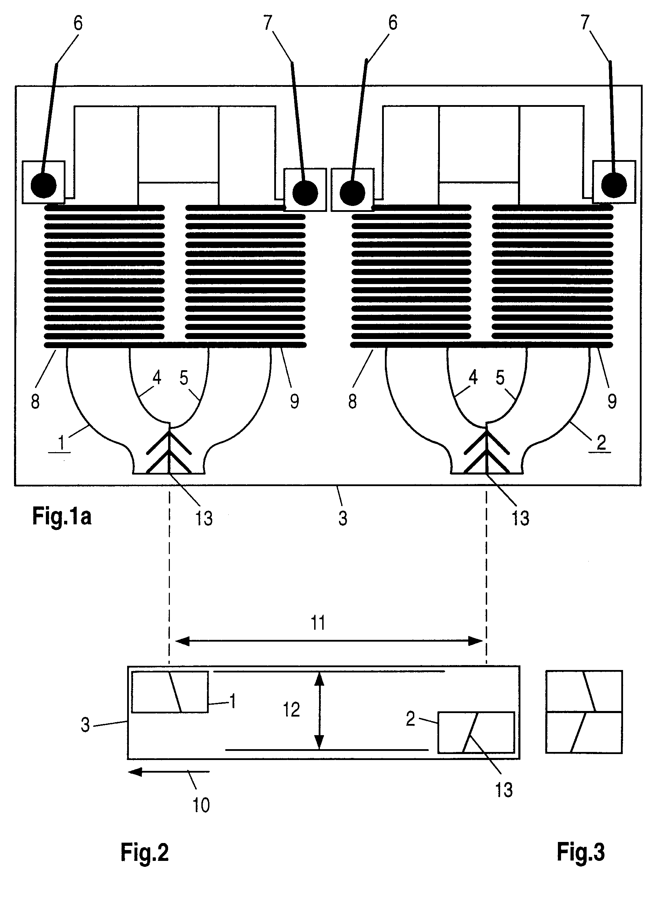

Represented in Figure 1a is a head arrangement with two magnetic heads 1, 2, which have been produced by means of the thin-film technique layer by layer on a substrate 3. The magnetic heads 1, 2 respectively include a magnetic yoke with two limbs 4, 5, which form a closed circuit for the magnetic flux. On the side directed towards the tape, they are designed in such a way that they form a head gap 13 with an oblique azimuth angle (see also Figure 2). The limbs 4, 5 are respectively surrounded in this exemplary embodiment by a coil-like, axial winding, by which the writing or reading of the information on the magnetic tape is brought about via electrical terminals 6, 7.

The axial windings 8, 9 may alternatively also be designed as spiral-like windings lying in one plane, as represented in Figure 1b. Here, a single magnetic head with a magnetic yoke with two limbs 4, 5 and a head gap 13 is represented. On the side opposite the head gap 13, the limbs 4, 5 are not directly connected to each other, but are directed upwards, as represented at the top in the side view of Figure 1b. Applied around these upwardly directed portions 14, 15 are spiral-like windings 16, 17, for example made of copper, which are connected to electrical terminals 6, 7 and which serve for exciting the magnetic head. This may be produced in a number of successive method steps in one process. Subsequently, a bridge 18 made of a magnetic material is placed over the spiral-like windings 16, 17, with the result that the magnetic flux is closed. The head gap 13 may be produced, for example, in a number of successive steps, firstly by applying the limb 4 of the magnetic yoke to the substrate. Subsequently, a layer of silicon dioxide ($SiO_2$), by which the width of the head gap 13 is defined, is applied in the region of the head gap 13. Subsequently, the second limb 5 is applied in further method steps. By different layers of silicon dioxide, short circuits within the windings 16, 17 can be avoided.

As clearly evident in this exemplary embodiment, very many method steps are required for producing a magnetic head by thin-film technology. The simultaneous arrangement of two heads on one substrate has the effect that two heads can be built up simultaneously, with the result that the process-engineering effort is not increased, or only very little, by this double-head arrangement.

The side of the substrate 3, with the head arrangement of Figure 1, directed towards the corresponding magnetic tape is represented in Figure 2. This side of the heads 1, 2 scans the magnetic tape with its head gaps 13. The writing direction of the heads in relation to the magnetic tape is indicated by the arrow 10. The head gaps 13 of the heads 1, 2 have a defined head spacing 11, which can be kept very small, less than/equal to 800 μm, preferably 500 - 550 μm, on account of the compact design of the heads 1, 2, as represented in Figure 1a. If the heads are used simultaneously for writing or reading, only minor problems with crosstalk attenuation occur even with this closely arranged design. Measures for further improving the crosstalk attenuation are explained more in the latter part of the description.

In this exemplary embodiment, the height 12 of the two heads 1, 2 is an exactly defined offset, with the result that two tracks without guard bands and with different azimuth angles, as represented in Figure 3, are written. By overwriting by the following head, the track width of a track may in this case be less than the head width of the heads 1, 2. The different height of the two heads 1, 2 on the substrate can be determined very exactly by suitable process steps of the thin-film technique. Mechanical adjustments, as with previously known double-head arrangements, are therefore not needed.

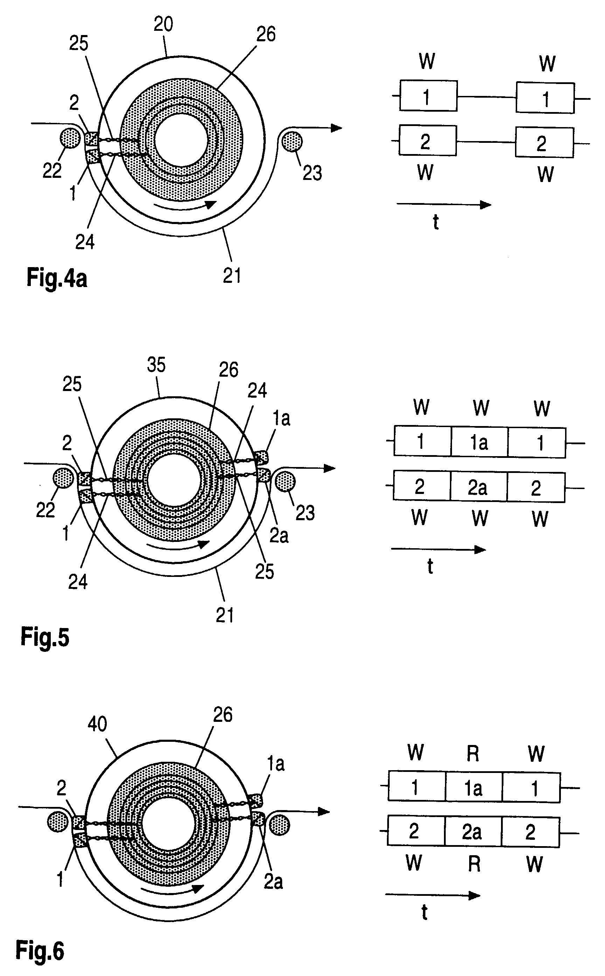

The head arrangement of Figure 1 may be used in a rotatable head drum 20, as diagrammatically represented in Figure 4a. The head arrangement with the two heads 1, 2 is arranged on the outer side of the head drum 20 in such a way that their head gaps are in contact with a magnetic tape 21, which is passed around the head drum 20 by about 180° via pinch rollers 22, 23.

The two heads 1, 2 have electrical connections 24, 25, which lead to a ferrite transformer 26, by which a signal transmission to the stationary part of the head drum 20 takes place.

Since the heads 1, 2 lie directly next to each other on the substrate 3, as explained with reference to Figures 1, 2, two tracks are written virtually simultaneously on the magnetic tape 21. In this exemplary embodiment, the heads are offset in their height in such a way that two closely neighbouring tracks are written without guard bands, as represented in Figure 3. The tape is in this case advanced in such a way that the next two tracks lie next to each other without any guard band.

Since the heads 1, 2 have different azimuth angles, and either only writing or only reading can be carried out simultaneously with both heads, no crosstalk problems occur. The time sequence of the writing operation is represented on the right in Figure 4a: the two heads 1, 2 write on the magnetic tape 21 virtually simultaneously during a rotation through 180° and continue the writing operation after a further rotation through 180°. Thus, time intervals occur between the writing operations in a way corresponding to the wrapping of the magnetic tape 21 around the head drum 20. The arrow t on the right beneath Figure 4a indicates the time direction. The reading of the magnetic tracks by the heads 1, 2 takes place correspondingly.

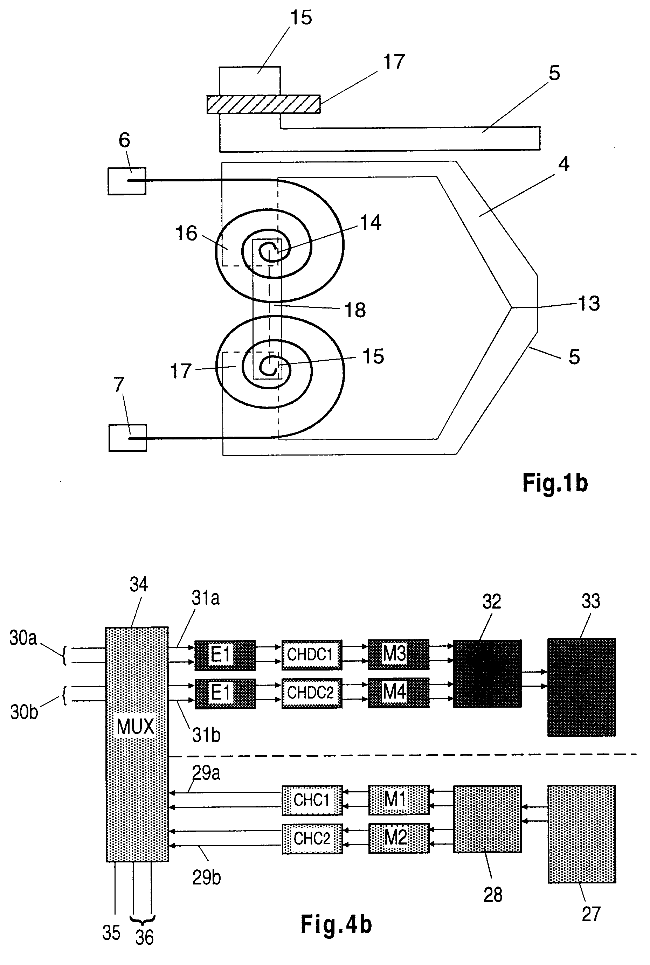

If there is a continuous data stream, in this exemplary embodiment the data must be at least partially buffer-stored. This is explained in more detail with reference to Figure 4b. Coming from a data-encoding unit 27, the data for the two heads 1, 2 of Figure 4a pass into an error-correction stage 28 and from there into two data memories M1 and M2. Subsequently, the data run through two channel-encoding stages CHC1, CHC2 and finally pass to the inputs 29a, 29b of a multiplexer 34, which at the same time serves as a writing/reading amplifier. The multiplexer 34 has two floating terminals 30a, 30b, which lead to the stationary part of a transformer, for example of the ferrite transformer 26, and on further to two heads. It has, furthermore, terminals 35, 36, via which it receives the information for head selection and for switching over between writing and reading.

The multiplexer 34 also has two data outputs 31a, 31b for the data read from the tape. These outputs 31a, 31b are connected to two equalizers E1, E2, two channel-decoding stages CHDC1, CHDC2 and also two data memories M3, M4. In a further error-correction stage 32, the signals read out from the two data memories M3, M4 are combined and subsequently fed to a data-decoding unit 33, where the data are decoded.

The mode of operation for recording data is in this case as follows: from the data-encoding unit 27, a continuous data stream is passed on to the error-correction stage 28, which provides the said stream with an error correction and divides it between the two heads. Subsequently, these data streams are continuously read into the data memories M1, M2. From the data memories M1, M2, the data for the heads 1, 2 of Figure 4a are then read out at double speed, with the result that no data are lost in the writing break of the heads. When the data are read from the tape, they are correspondingly read at double speed by the multiplexer 34 into the data memories M3, M4, with the result that the data can be continuously read out and combined in the following error-correction stage 33.

Represented in Figure 5 is a head drum 35 with two pair-of-heads arrangements, which respectively have two heads 1, 2; 1a, 2a, at a 180° interval on the head drum. The heads 1, 2; 1a, 2a are connected via electrical connections 24, 25 to a ferrite transformer 26, as already explained with reference to Figure 4a. The heads of these two arrangements respectively have different azimuth angles and an offset in their height of about one track, like the heads 1, 2 of the head arrangement of Figure 4a. The two pair-of-heads arrangements are at the same height in the head drum 20. This permits continuous writing or reading, without guard bands, of data on the tape 21, as indicated on the right in Figure 5. The groups of heads 1, 2 and 1a, 2a, respectively, either write simultaneously or read simultaneously, with the result that the data can be continuously processed. The data rate which can be achieved in this exemplary embodiment is therefore twice as high as that in Figure 4a. This permits applications for HDTV recorders and high-speed data streamers.

The exemplary embodiment of the head drum 40 of Figure 6 is similar in the Figure to that of Figure 5. The main difference is that the two pair-of-heads arrangements with the heads 1, 2; 1a, 2a are offset with respect to each other by a track height, with the result that the pairs of heads 1, 1a and 2, 2a respectively scan the same tracks on the magnetic tape. This permits applications in which the pair of heads 1, 2 writes two tracks with both heads simultaneously and the pair of heads 1a, 2a arranged opposite on the head drum 40 subsequently reads the data again, as illustrated on the right in Figure 6. The arrow t here again indicates the time direction. By this arrangement, bit errors can be detected immediately during writing onto the tape. This property is advantageous for data streamers and is known as a "read-after-write" function.

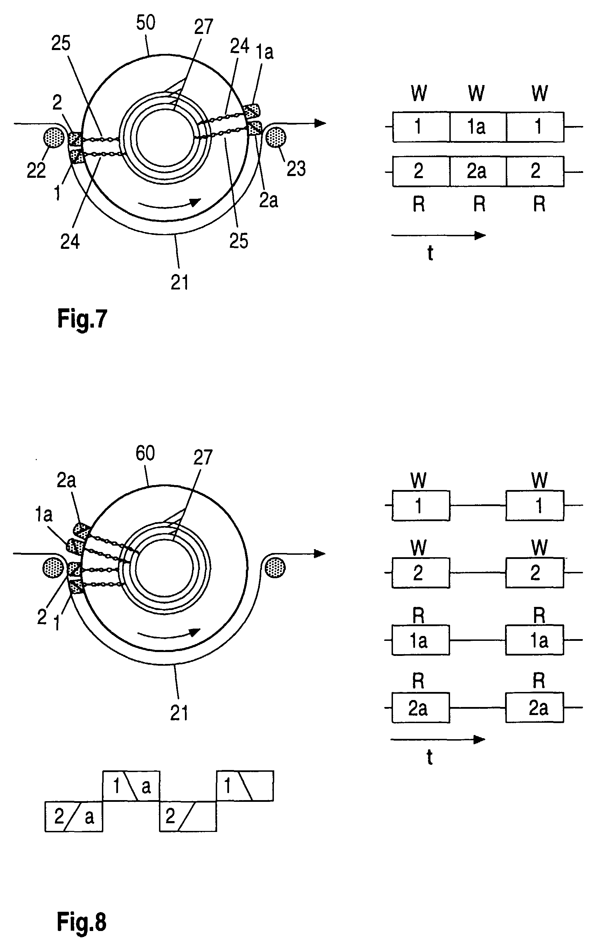

Represented in the exemplary embodiment of Figure 7, with a head drum 50, are two pair-of-heads arrangements with heads 1, 2; 1a, 2a, the heads of a pair of heads respectively having the same azimuth angle. The height of the two heads of an arrangement are in each case the same here, with the result that the heads of a pair-of-heads arrangement respectively scan the same track. The two opposite pair-of-heads arrangements are arranged approximately at the same track height, with the result that neighbouring tracks can be written or read.

In this exemplary embodiment, the heads 1, 2 and 1a, 2a respectively perform different functions; while head 1 writes, head 2 subsequently reads the written data; the same applies analogously to heads 1a, 2a. Thus, the written data are likewise checked for bit errors by the head drum 50, as in the exemplary embodiment of Figure 6. The heads 1 and 1a and the heads 2 and 2a are respectively used only for writing or reading and can therefore be optimized for these purposes. For example, the writing track width can be made greater than that of the reading head. A further development is to design the writing heads for inductive writing and the reading heads for magnetoresistive reading.

The time sequences of this exemplary embodiment are illustrated on the right in Figure 7: head 1 writes and head 2 reads the data written by head 1 virtually simultaneously. After a rotation through 180°, head 1a writes a directly neighbouring track, which is read again by head 2a to a certain extent simultaneously.

In this exemplary embodiment, additional measures can be taken against crosstalk, since heads lying closely next to one other are simultaneously reading and writing. For example, a magnetic barrier which contains a thin-film material conducting the magnetic flux and is designed in the form of a short-circuit winding may be arranged on the substrate between the two heads 1, 2 and 1a, 2a. The same material which was also used for the yoke 4, 5 (see Figure 1) may be used for this barrier. In addition, the ferrite transformer is replaced here by individual thin-film transformers 27, which are spatially separate from one other. They have considerably lower crosstalk than a ferrite transformer for the four signals. To reduce the crosstalk still further, a short-circuit winding may be applied by the thin-film technique in each case between the thin-film transformers 27. By these measures, altogether crosstalk attenuations of 90 dB can be achieved.

If thin-film transformers are used for the data transmission, the entire arrangement can be produced by the thin-film technique on just one substrate: this applies both to the heads 1, 2; 1a, 2a and the thin-film transformers 27 and to the associated connections 24, 25. At the same time, additional electronic circuits, such as for example amplifiers and preamplifiers, can also be integrated on the silicon substrate.

In a further exemplary embodiment, represented in Figure 8, four heads 1, 2, 1a, 2a are grouped closely next to one another on a substrate and integrated into a head drum 60. The heads 1, 2, 1a, 2a are here likewise connected to thin-film transformers 27 via electrical connections. The heads 1 and 2 and 1a and 2a respectively have different azimuth angles and are respectively offset with respect to each other by about one track, with the result that the heads 1 and 2 write simultaneously on two adjacent tracks on the magnetic tape 21, which are subsequently read again by the heads 1a and 2a.

This is illustrated on the right in Figure 8: the heads 1 and 2 write and the heads 1a and 2a read to a certain extent simultaneously, since the spatial arrangement of the four heads is less than 1 mm in their longitudinal dimension. After a rotation through 180°, there is a corresponding break for the writing-reading operations, until the heads 1, 2, 1a, 2a come into renewed contact with the tape 21 and write two directly neighbouring tapes. The arrangement of the heads 1, 2, 1a, 2a in their height and their width on the substrate and the position of their azimuth angles is additionally illustrated at the bottom of Figure 8.

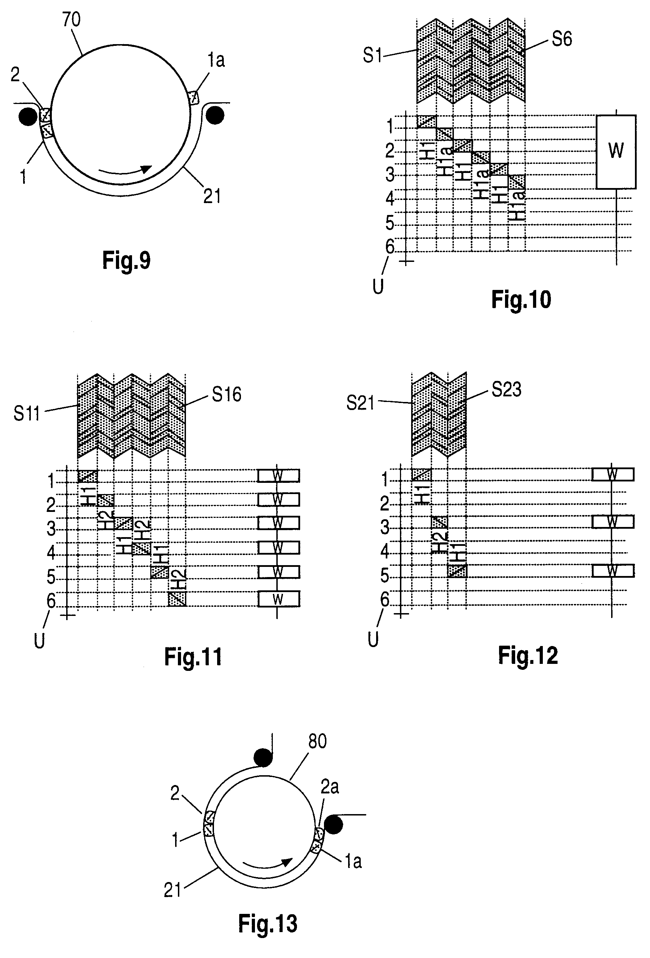

Represented in Figure 9 is a head drum 70 with a pair of heads, heads 1 and 2, and a single head 1a, which are arranged lying opposite each other on the head drum 70 at an interval of 180°. The azimuth angles of the heads 1 and 2 are opposed in this case and the azimuth angle of the head 1a corresponds to one of the two azimuth angles of the heads 1 or 2, in this exemplary embodiment the azimuth angle of the head 2. By this arrangement, a large number of different data rates can be written and read with three heads alone, such as for example at the normal data rate, half the data rate, 1/3 and 1/4 the data rate, and so on. This is brought about by alternating writing with either the heads 1 and 2 or the heads 1 and 1a, by reducing the tape speed and by interruptions in the writing operation at a reduced data rate. This is subsequently explained in more detail with reference to Figures 10 - 12.

In Figure 10, S1- S6 symbolically represent six slanting tracks on a magnetic tape, which are written alternately with different azimuth angles. In this exemplary embodiment, these tracks are written at normal tape speed without interruption, in that the heads 1 and 1a, indicated by H1 and H1a in Figure 10, are written alternately without interruption. This writing phase is indicated by the block W and takes place within three revolutions U of the head drum 70, Figure 9.

Represented in Figure 11 is an operating mode in which writing is performed at half the data rate and half the tape speed. The slanting tracks S11 to S16 are likewise written here without guard bands. They are written by the heads 1 and 2 alternately with different azimuth angles, it being respectively the case during a revolution that one of the two heads is active during the 180° coverage of the magnetic tape and subsequently the writing process for the same side is interrupted, as indicated on the right in Figure 11 by the writing blocks W. Therefore, six revolutions U are required for the six tracks S11 to S16.

In Figure 12, writing is performed at a data rate of 6.25 Mbps at a tape speed of 4.7 mm per second by the heads 1 and 2, denoted in Figure 12 by H1 and H2. Three slanting tracks S21 to S23 are indicated, which are written in the first half of the first revolution by the head 1, in the first half of the third revolution by head 2 and in the first half of the fifth revolution again by head 1. The fourth slanting track is subsequently written in the first half of the seventh revolution. The recording is interrupted between these writing phases, as illustrated on the right by the writing blocks W. It is ensured by this delayed recording that the slanting tracks S21 to S23 are likewise written without guard bands and with different azimuth angles. In the case of the recording represented in Figure 10, the data rate is 25 Mbps at a tape speed of 18.8 mm/s and in the case of the recording of Figure 11 it is 12.5 Mbps at a tape speed of 9.4 mm/s.

The writing and reading electronics for this 3-head system can be correspondingly adapted. The electronic circuitry is less complex for this system than for a 4-head system according to Figure 4b: only one channel is respectively required for writing and reading data, with the result that in each case one of the channels between the multiplexer 34 and error-correction stage 28 or 32, for example the one with the circuits E1, CHDC2, M4 and CHC2, M2, can be omitted. Since buffer-storing is necessary at reduced data rates, the two data memories M1 and M3 continue to be required.

By suitable combination of two heads of the three heads 1, 2 and 1a and suitable choice of the tape speed, it is thus possible to record at a wide variety of data rates without guard bands, both reduced data rates of even-numbered proportions 1/2, 1/4, ... and of odd-numbered proportions 1/3, 1/5, etc. With a 2-head system, it is only possible to record at reduced data rates of odd-numbered proportions. In reproduction, either the same process as in writing can be used, or the two heads 1 and 2 are used for reading in parallel. Repeated scanning and reading out (overscanning) in this case provides additional possibilities for DV (Digital Video), such as for example slow-motion or search modes at a number of speeds with better image reproduction.

In Figure 13 there is indicated a system with a head drum 80, which can be advantageously used in a DV device. The essential parameters for the DV system are: tape speed 18.8 mm per second, rotational head drum speed $w_1$ = 9000 revolutions per minute, head drum diameter $y_1$ = 21.7 mm and head drum wrap $z_1$ = 180°. By the use of two pairs of heads 1, 2 and 1a, 2a, the diameter of the head drum can be considerably reduced. With a reduction in the diameter of the head drum 80 by a factor of, for example, a = 2/3, the system parameters are then: $w_2 = w_1 \times 3/2$ = 13500 revolutions per minute, $y_2 = y_1 \times 2/3$ = 14.46 mm and $z_2 = z_1 \times 3/2$ = 270°, at the same tape speed. Other head drum diameters are analogously scaled according to this method. The track width of the DV system in normal operation is 10 μm and in long play is 6.7 μm. With a head drum diameter of 14.46 mm, both pairs of heads 1, 2 and 1a, 2a can, for these values, already be produced economically on a single silicon substrate, on which the corresponding transformers and possibly further electronics can also be additionally integrated. As a result, there is no need for the mounting and adjusting operations of individual pairs of heads or individual heads in the head drum. At the same time, this arrangement with the parameters $w_2$, $y_2$ and $z_2$ is fully compatible with the DV system with the parameters $w_1$, $y_1$ and $z_1$. In the case of other apparatuses with digital recording and reproduction, the diameters of the head drums may likewise be reduced by this scaling, with the result that double-head arrangements based on the thin-film technique can also be used advantageously for these.

## Claims

1. Head drum (20, 35, 40, 50, 60, 70, 80) with a head arrangement based on the thin-film technique for magnetic tape apparatuses which record on slanting tracks, characterized in that at least two heads (1, 2; 1a, 2a) are arranged on a substrate (3) as a pair of heads with a defined height (12) for writing and/or reading the slanting tracks, and in that the height (12) is chosen such that the tracks are written without any guard band.

2. Head drum (20, 35, 40, 50, 60, 70, 80) according to Claim 1, characterized in that the head spacing (11) between the two heads (1, 2; 1a, 2a) of the pair of heads is less than/equal to 800 μm.

3. Head drum (20, 35, 40, 50, 60, 70, 80) according to Claim 1 or 2, characterized in that the heads (1, 2; 1a, 2a) have coil-like, axial windings (8, 9) or spiral-like windings.

4. Head drum (35, 40, 80) according to Claim 1, 2 or 3, characterized in that the head drum (35) includes two head arrangements with in each case one pair of heads, in that the two heads (1, 2; 1a, 2a) of each pair of heads are formed with different azimuth angles, and in that the two pairs of heads are arranged at an approximately 180° interval on the head drum (35).

5. Head drum (35) according to Claim 4, characterized in that the head drum (35) includes a ferrite transformer (26) for the data transmission, and in that the two head arrangements in the head drum (35) have approximately the same height (12).

6. Head drum (40) according to Claim 4, characterized in that the head drum (40) includes a ferrite transformer (26) for the data transmission, and in that the two head arrangements on the head drum (40) are offset in height with respect to each other in such a way that, during a revolution of the head drum (40), they scan the same track on the tape (21).

7. Head drum (50) according to Claim 1, 2 or 3, characterized in that the head drum (50) includes two head arrangements with in each case one pair of heads, in that the two heads (1, 2; 1a, 2a) of one head arrangement are respectively formed with approximately the same azimuth angle, in that the two pairs of heads are arranged at an approximately 180° interval on the head drum (50), in that the head drum (50) contains one or more thin-film transformer channels (27) for the data transmission, and in that the two head arrangements on the head drum (50) are arranged in height in such a way that, during a revolution of the head drum (50), they scan adjacent tracks on the tape.

8. Head drum (60) according to Claim 1, 2 or 3, characterized in that it includes two closely neighbouring heads on a substrate (3), in that in each case the two heads (1, 2; 1a, 2a) of a pair of heads have a different azimuth angle, in that the two heads (1, 2; 1a, 2a) of each pair of heads have a track offset of approximately one track, and in that the head drum (60) contains one or more thin-film transformer channels (27) for the data transmission.

9. Head drum (50, 60) according to Claim 7 or 8, characterized in that the two pairs of heads and the thin-film transformer channel or channels (27) are arranged together with preamplifier electronics and conductor tracks on a substrate (3).

10. Head drum (50, 60) according to Claim 7 or 8, characterized in that a magnetic barrier in the form of a short-circuit winding, which contains the same magnetic material as the magnetic material used in the heads (1, 2; 1a, 2a), is arranged between neighbouring heads (1, 2; 1a, 2a).

11. Head drum (50, 60) according to Claim 7 or 8, characterized in that a short-circuit winding is arranged between two thin-film transformers (27) to improve the crosstalk attenuation.

12. Head drum (40, 60) according to Claim 4 or 8, characterized in that the writing heads (1, 2) are designed for inductive writing and the reading heads (1a, 2a) are designed for magnetoresistive reading.

13. Head drum (70) according to Claim 1, 2 or 3, characterized in that it includes a head arrangement with a pair of heads, the heads (1, 2) of which are formed with different azimuth angles, and a third, single head (1a) at an approximately 180° interval on the head drum (70).

14. Head drum (80) according to Claim 4, characterized in that, in comparison with a DV device with the parameters $w_1$, $y_1$, $z_1$ or another device with digital recording and reproduction, the rotational head speed is $w_2 = w_1/a$, the head diameter is $y_2 = y_1 \times a$ and the angle of wrap is $z_2 = z_1/a$ at the same tape speed, with a scaling factor a which is less than one.

15. Head drum (80) according to Claim 14, characterized in that the two pairs of heads (1, 2; 1a, 2a) are arranged together with the associated writing/reading amplifiers and transformers on a substrate.

16. Magnetic tape apparatus with a head drum for helical recordings, characterized in that at least two heads (1, 2) are arranged in the head drum (20, 35, 40, 50, 60, 70, 80) on a substrate (3) by means of the thin-film technique with a defined height (12) as a pair of heads for writing and/or reading the slanting tracks, and in that the height (12) is chosen such that the tracks are written without any guard band.

17. Magnetic tape apparatus with a head drum according to Claim 5 or 7, characterized in that, in the case of a recording, both heads of the two pairs of heads (1, 2; 1a, 2a) write alternately on adjacent tracks with a continuous data stream.

18. Magnetic tape apparatus with a head drum according to Claim 6, characterized in that, in the case of a recording, the two heads (1, 2) of the first pair of heads simultaneously write and the two heads (1a, 2a) of the second pair of heads subsequently read the tracks written by the first pair of heads.

19. Magnetic tape apparatus with a head drum according to Claim 8, characterized in that, in the case of a recording, both heads (1, 2) of the first pair of heads write and the heads (1a, 2a) of the second pair of heads read the previously written tracks.

20. Magnetic tape apparatus with a head drum according to Claim 13, characterized in that, in the case of a recording operation, depending on the data rate, the first head (1) and the third head (1a) are alternately active or the first head (1) and the second head (2) are alternately active, the third head (1a) having the same azimuth angle as either the first head (1) or the second head (2).

21. Magnetic tape apparatus with a head drum according to Claim 14, characterized in that, in the case of a recording, both heads of each pair of heads (1, 2; 1a, 2a) write when there is tape contact and neighbouring tracks lie next to one another on the magnetic tape (21) without guard bands.

**Fig.1a**

**Fig.2**

**Fig.3**

**Fig.1b**

**Fig.4b**

**Fig.4a**

**Fig.5**

**Fig.6**

**Fig.7**

**Fig.8**

**Fig.9**

**Fig.10**

**Fig.11**

**Fig.12**

**Fig.13**